# EUROPEAN PATENT APPLICATION

(11) **EP 1 729 207 A2**
(43) Date of publication of application: **06.12.2006**
(21) Application number: 06252701.5
(22) Date of filing: 24.05.2006
(51) Int. Cl.: G06F 3/033

(54) **System and methods for navigating displayed content**

(30) Priority: 31.05.2005 US 686138 P; 10.02.2006 US 352029
(71) Applicant: Picsel (Research) Limited, Glasgow G51 4BP (GB)
(72) Inventor: Anwar, Majid, Glasgow G46 6SF (GB)
(74) Representative: Cooper, John

(57) **Abstract**

The invention relates to systems and methods for navigating display items on a computing device in response to certain navigational inputs entered by the user of the computing device. The invention also provides for dynamically zooming and rearranging display items in response the navigational inputs.

## Description

### Background

Recent years have seen rapid growth in the area of mobile computing and telecommunications. Mobile devices, such as PDAs and cellular telephones, typically have comparatively small display screens. Consequently, it can be difficult for these devices to display the large amounts of textual and graphical information typically included in modem, content-rich user interfaces. Furthermore, navigating through the display of these devices can also be difficult given this large amount of information.

One approach to overcoming these problems is to provide a broad overview of such information (e.g. in iconic or note form) and allow the user to select items of interest that are then displayed in greater detail (e.g. in greater magnification or focus).

Conventional methods of zooming from one view of a display to another view of the same display operate on the basis of the selection of a particular zoom or size from a menu. This causes the display to change from an initial display to a new display with the selected scale. However, these methods only show the initial and final version of the new display. This effect can be quite helpful, but it may require the user to pan or reposition the information being viewed when a "zoom in" operation causes parts of a display to reside beyond the visible screen area.

Improved systems and methods for displaying information are desired.

### Summary of the Invention

The systems and methods described herein include improved systems and methods for navigating displayed content in computing devices.

In one aspect, the invention relates to a computing device that provides an improved method for navigating large bodies of content. More particularly, the computing device provides multiple navigation modes which can be accessed, for example, by repeated successive actuations of a navigational input. Each successive navigational mode provides faster navigation through the content. In one mode, in addition to increasing navigation speed, the computing device reduces the scale of the displayed contents so that more of the content is visible on a display screen at once.

More particularly, in one aspect, the systems and methods described herein include methods of navigating content on a computing device. These methods include the steps of displaying content on the computing device at a first scale, navigating a first discrete distance through the displayed content in response to receiving a first navigation input via the computing device, and initiating a continuous navigation through the content and reducing the scale of the content such that more of the content is displayed on the computing device at a time in response to receiving a subsequent navigation input via the computing device. Such methods may further comprise a step of initiating a repeated discrete navigation through the content in response to receiving an intermediate navigation input via the computing device after the first navigation input and before the subsequent navigation input. During the repeated discrete navigation, such methods may comprise the step of stopping the navigation in response to receiving an additional navigation input via the computing device. The methods may optionally comprise the step of initiating a repeated discrete navigation in response to receiving an additional navigation input via the computing device during continuous navigation.

In such methods, reducing the scale of the content includes progressively reducing the scale of the content from the first scale to a second scale. The methods may further comprise displaying an indicator identifying a currently displayed location of the content during the continuous navigation through the content. Such methods may also include the step of rearranging the contents of a display based on the scale at which the content is displayed.

Additionally and optionally, the methods may include the step of stopping the navigation in response to receiving an additional navigation input via the computing device during continuous navigation. The step of stopping the navigation may include progressively slowing the continuous navigation until the navigation stops. The step of stopping the navigation may comprise at least one of increasing the scale of the content back to the first scale and progressively increasing the scale.

In such methods, content may comprise a menu of a user interface. Optionally, the content may comprise a list and the discrete navigation may comprise navigating from one selected item in the list to a neighboring item on the list. Additionally and optionally, the list may be configurable to include at least one of a text item and an image item as a structured list entry.

In another aspect, the systems and methods described herein include methods of navigating content on a computing device. These methods may comprise the steps of displaying content on the computing device at a first scale, and initiating a continuous navigation through the content in response to receiving a navigation input via the computing device. The computing device may progressively reduce the scale of the content from the first scale to a second scale during the continuous navigation and rearrange the contents of a display based on the scale at which the content is displayed.

In such methods the navigation may be stopped in response to receiving an additional navigation input via the computing device during continuous navigation. A repeated discrete navigation may also be initiated in response to receiving an additional navigation input via the computing device during continuous navigation. Optionally, the reduction in the scale of the content may be stopped in response to receiving an additional navigation input via the computing device during continuous navigation. The rearrangement of the contents of the display may also be stopped in response to receiving an additional navigation input via the computing device during continuous navigation. In such methods, the content may be a menu of a user interface.

In another aspect, the systems and methods described herein include user interfaces for navigating content on a computing device. These user interfaces may comprise an input device for accepting a plurality of navigational inputs and a navigation control module. The navigation control module may include a finite state machine (FSM) having states including a stop state, a single discrete navigation state, and a continuous navigation state. In the continuous navigation state, the user interface decreases the scale of content displayed on the computing device such that additional content can be displayed at a time. The finite state machine may also have transition conditions including the acceptance of the navigational inputs from the input device. In such systems, movement from one state to another in the finite state machine is initiated upon acceptance of one of the navigational inputs from the input device.

In such user interfaces, the finite state machine may include a repeated discrete navigation state. Optionally, in the continuous navigation state, the user interface may rearrange the content on the display. The input device may include at least one of a keyboard, keypad, mouse, joystick, scroll-wheel and touch-sensitive surface and the navigational input includes directional navigational inputs.

Such user interfaces may comprise a second navigation control module such that the at least two navigation control modules are used to navigate along two dimensions, wherein each navigation control module correspond to navigation along a different dimension. Additionally and optionally, the user interface may include a memory module comprising a database having state and transition condition information.

In one implementation of the user interface, the navigation control module may change the state of the finite state machine in response to receiving one or more directional inputs in a first direction. For example, the navigation control module may change the state of the finite state machine from the stopped state to the single discrete navigation state in response to receiving the directional navigation input having a first direction. In such an implementation, the navigation control module may change the state of the finite state machine from the single discrete navigation state to the repeated discrete navigation state in response to receiving a second directional navigation input having the first direction. The navigation control module may change the state of the finite state machine from the repeated discrete navigation state to the continuous navigation state in response to receiving a third directional navigation input having the first direction. The navigation control module may change the state of the finite state machine from the continuous navigation state to the stopped state in response in response to receiving a fourth directional navigation input.

In one embodiment, the navigation control module changes the state of the finite state machine in response to receiving a navigation input having a direction opposite to the first direction. For example, the navigation control module may change the state of the finite state machine from repeated discrete navigation state to a stopped state in response to receiving a directional navigation input having a direction opposite to the first direction. Additionally and optionally, the navigation control module may also change the state of the finite state machine from the continuous navigation state to a stopped state in response to receiving a directional navigation input having a direction opposite to the first direction. Optionally, the navigation control module may change the state of the finite state machine from the continuous navigation state to a repeated discrete navigation state in response to receiving a directional navigation input having a direction opposite to the first direction. The navigation control module may change the state of the finite state machine from single discrete navigation state to a stopped state in response to receiving a directional navigation input having a direction opposite to the first direction.

In another embodiment, the navigation control changes state in response to expiration of time. For example, the navigation control module may change the state of the finite state machine from single discrete navigation state to a stopped state after a certain period of time has elapsed with no navigational input. Additionally and optionally, the navigation control module may change the state of the finite state machine from repeated discrete navigation state to a stopped state after a certain period of time has elapsed with no navigational input. The navigation control module may also change the state of the finite state machine from the continuous navigation state to a stopped state after a certain period of time has elapsed with no navigational input. In such user interfaces, the acceptance of a navigational input may include detecting a navigational input comprising at least one of a key press, touch screen or touch pad input, mouse or trackball input including a button single-click or double-click, a scroll wheel input, a time duration of activation of a navigational input and a time interval following a navigational input or between successive navigational inputs.

### Brief Description of the Drawing

The following figures depict certain illustrative embodiments of the invention in which like reference numerals refer to like elements. These depicted embodiments may not be drawn to scale and are to be understood as illustrative of the invention and not as limiting in any way.
Figure 1 is a functional block diagram of a computing device, according to one illustrative embodiment of the invention.
Figure 2 is a flow chart depicting the operation of a portion of a computing device of Figure 1, according to one illustrative embodiment of the invention.
Figure 3 is a diagram illustrating a finite state machine incorporated into the computing device of Figure 1 for providing control of content navigation, according to an illustrative embodiment of the invention.
Figure 4 depicts a series of screen shots illustrating content navigation, according to one implementation of the method of the invention.
Figure 5 depicts a series of screen shots generated according to another illustrative embodiment of the invention in which the scale and the arrangement of a body of text are modified in response to the navigation.
Figure 6 depicts a series of conceptual screen shots generated according to another illustrative embodiment of the invention in which content is dynamically rearranged in response to the navigation.
Figure 7 depicts a series of screen shots generated according to another illustrative embodiment of the invention in which the contents of a map are modified in response to the navigation.
Figure 8 is a system for providing control of content navigation in more than one dimension, according to an illustrative embodiment of the invention.
Figure 9 depicts an architecture for interfacing a software development kit with a computing device, according to one illustrative embodiment.

### Detailed Description

The systems and methods described herein will now be described with reference to certain illustrative embodiments, although the invention is not to be limited to these illustrated embodiments which are provided merely for the purpose of describing the systems and methods of the invention and are not to be understood as limiting in any way. As will be seen from the following description, the invention in one aspect relates to a computing device that provides an improved method for navigating large bodies of content. More particularly, the computing device provides multiple navigation modes which can be accessed, for example, by repeated successive actuations of a navigational input. Each successive navigational mode, for example, may provide faster navigation through the content. In one exemplary mode, in addition to increasing scrolling speed, the computing device reduces the scale of the displayed contents so that more of the content is visible on a display screen at once.

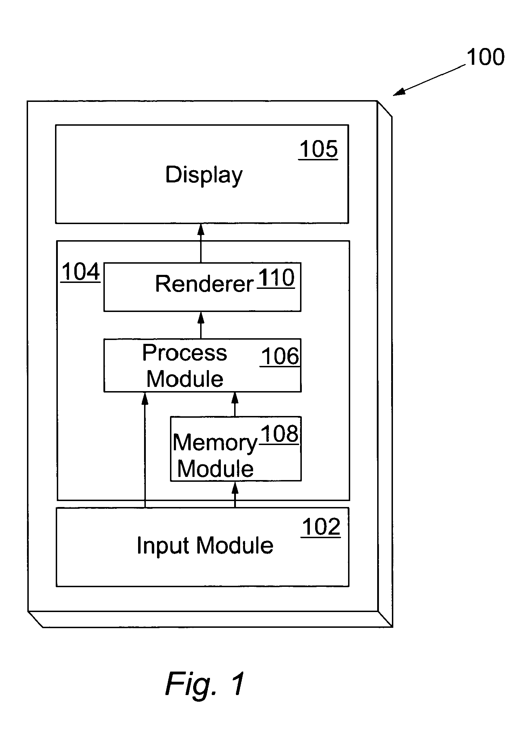

Figure 1 depicts a functional block diagram of a computing device 100. The computing device 100 may be, without limitation, a mobile device such as a cellphone, a personal digital assistant, an MP3 player, a laptop, a GPS device or an e-book. The computing device 100 may also be a desktop computer system or an interactive television system. As shown in Figure 1, the computing device 100 includes an input module 102, a navigation module 104 and a display 105. In general, a user enters navigational inputs by operating the input module 102. The navigational inputs are processed by the navigation module 104 to effectuate changes in the display of content on the display 105. The content may include textual data arranged in a list such as a contact list, an email list, a file list, a song list, or a play list. The content may also include graphical images such as a map, blueprint, or other image. In one embodiment, a list may be configurable to include at least one of a text item and an image item as a list entry that conforms to the structure of the list. The changes in the display of the content may include, for example, scrolling, panning, zooming, and content rearrangement.

The input module 102 accepts navigational inputs entered by a user. The input module 102 includes, for example, an input device such as a keyboard, a keypad, a mouse, a scroll-wheel or a touch sensitive surface. A user enters a navigational input by actuating the input device. The input module 102 outputs detected navigational inputs to the navigation module 104. The user input module 102 may also output additional information, such as the current location of a pointer or a mouse cursor on the display 105.

The navigation module 104 interprets navigational inputs entered by a user and graphically alters the display of content in response thereto. The navigation module 104 includes a process module 106, a memory module 108 and a renderer 110. The process module 106 processes the navigational inputs entered by the user (received from the input module 102) and generates one or more virtual pages for presentation to the user via the display 105. Virtual pages represent the arrangement of contents for internal computation purposes within the computing device 100 and may not be visible to the user. For example, a virtual page may represent a desired content arrangement for presentation at a desired instant in time. The process module 106 outputs the virtual pages to the renderer 110. The renderer 110 converts the virtual pages to a format suitable for driving the display 105 to present the content included therein. The memory module 108 stores current virtual page information as well as currently entered navigational inputs entered by the user. The stored virtual page information and the stored navigational inputs may be used for processing future navigational inputs and generating future virtual pages in response to current or future navigational inputs.

The process module 106 includes a finite state machine (FSM) for governing navigation of the content. An FSM generally includes a plurality of states and one or more transition rules corresponding to each state. The transition rules, if met, result in the FSM switching states. In general, each state in the FSM corresponds to a particular navigation mode. In general, the transition rules in the FSM include a test condition and a corresponding response. A test condition includes a Boolean function. In response to the process module 106 determining that the Boolean function is true, the process module 106 executes the corresponding response. The test conditions relate to inputs of navigational inputs and the response includes a state change.

The process module 106 may include a microprocessor to perform calculations and decide if a transition from one state to another is in order. The process module 106 may include both hardware and software components to implement the FSM and generate virtual pages.

Hardware components typically used to build the process module 106 may include programmable logic devices, programmable logic controllers, logic gates and flip flops or relays. Hardware implementation typically requires a register to store states, a block of combinational logic which determines the test conditions of transition rules, and a second block of combinational logic that determines the responses of transition rules. An FSM may be created and implemented using software tools including, but not limited to, the AT&T FSM Library ™ provided by AT&T Labs, New Jersey, U.S.A. An FSM may also be created and implemented using software languages including, but not limited to, C, C++, JAVA, SCXML (State Chart XML). Interactive software modules may also be included in the process module 106 that may assist users with navigation.

In alternative embodiments (not shown in Figure 1), the computing device 100 may comprise additional modules such as a power supply module and an external interface module. In other embodiments, the computing device 100 may comprise additional modules that are related to the specific application of the device such as a satellite receiver in GPS devices or interactive software programs and telephony in cellphones or audio codecs in MP3 players and cellphones. These additional modules, or others, may be included without departing from the scope of the invention.

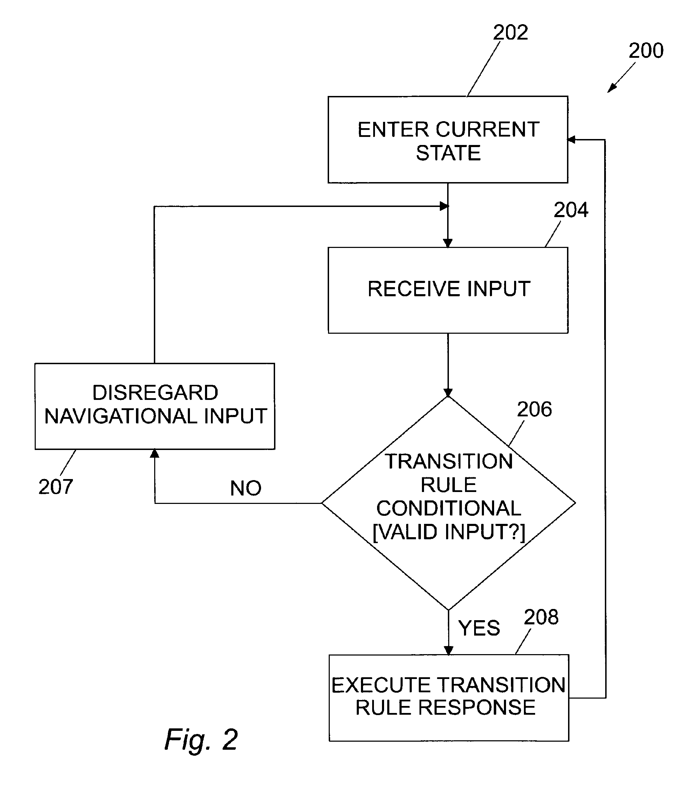

Figure 2 is a flow chart showing a process 200 for interpreting navigational inputs obtained from the input module 102 of a computing device 100 of Figure 1 to transition between various navigation modes using a finite state machine (FSM). As noted above, the process module 106 may include a finite state machine (FSM) comprising states and transition rules. The process 200 begins with the process module 106 entering a current state of the FSM (step 202). The current state may be an initial state in the computing device 100 or may be a state reached after previous navigation. The computing device 100 then receives a navigational input from the input module 102 (step 204). The process module 106 evaluates the test conditions of the transition rules corresponding to the current state to determine if any of the test conditions are true (step 206). If the process module 106 decides that no test conditions are met, the process module 106 disregards the navigational input (step 207) and awaits further input module (102) output. If at the decision block 206 the process module 106 determines that a test condition of one of the transition rules is met, then the process module 106 executes the transition rule response (step 208). In one example, executing a transition rule response results in the process module 106 entering a new current state (step 202) of the FSM.

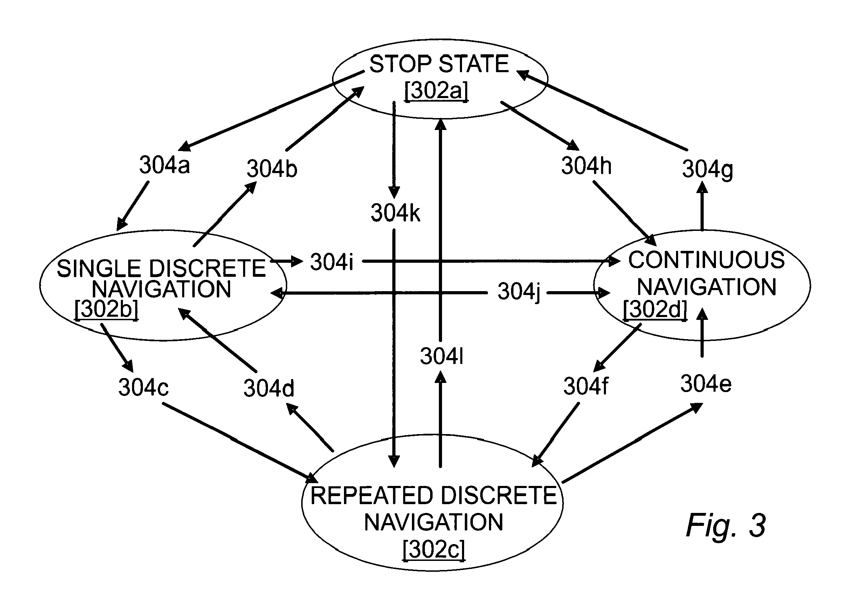

Figure 3 depicts one suitable FSM 300 for use in a process module 106 according to one illustrative embodiment. It will be understood that the FSM 300 as illustrated and described below is merely one example of the manner in which the present invention may be implemented by way of a FSM. The following discussion, in general, assumes the use of a pair of directional arrow keys or buttons (down and up) for manual navigation input, but it will be appreciated that other types or combinations of input devices could be employed. Different and/or additional states, state transitions and transition rules may be employed as necessary depending on the type of input device, the specific functionality required, and the specific navigational inputs associated with the transition rules. For example, in the case where manual navigation input is by way of directional arrow keys or buttons, particular state transitions or sequences of state transitions may occur in response to keys being pressed and then released within particular time periods, being pressed and held indefinitely, durations of time periods between key presses, etc. Further, a sequence of navigation inputs may comprise a single key press or the like where a key is pressed and held for a period during which a series of time thresholds are passed, the passing of each time threshold constituting a further navigation input.

In the following description, numerous examples are given of state transitions, transition rules and associated practical functionality, some of which may be logically inconsistent with others and which, as such, will be understood as being examples of many possible alternatives. Some examples may also require the FSM to include states and transition rules additional to those shown in Figure 3, but which are not described in detail, such details being readily apparent to those skilled in the art in light of the present teaching.

Figure 3 shows a finite state machine (FSM) 300 having states 302a - 302d (in general, "states 302") and transition rules illustrated with arrows 304a - 3041 (in general, "transition rules 304"). More specifically, the FSM includes a stop state 302a, a single discrete navigation state 302b, a repeated discrete navigation state 302c and a continuous navigation state 302d. As noted earlier, the FSM 300, which may be included in the process module 106, governs the navigation of content displayed on a computing device 100. The states 302 are representative of navigation modes and the transition rules 304 represent the test conditions and responses for handling navigational inputs obtained from the input module 102 of computing device 100 of Figure 1. Each of the states 302 are illustrated to be linked to two other states 302 by transition rules 304. The FSM 300 illustrates the general structure of the navigation operation in the computing device 100.

The stop state 302a represents a state of navigation in which the contents presented on display 105 are non-moving, presented at an initial scale, and arranged in an initial layout on a screen. In alternative embodiments, the stop state may include contents arranged in an alternative layout that is different from an initial layout. The contents may also be displayed at another scale, different from the initial scale. In the stop state 302a, the process module 106 in the computing device 100 generates a single virtual page to represent the content. The rendering module 110, renders this single virtual page until the user enters a navigational input.

Transition rule 304a links the stop state 302a to the single discrete navigation state 302b. In one embodiment, the transition condition of transition rule 304a is met if the user enters a directional input (a navigational input such as a down-arrow key on a keypad). In such an embodiment, on receiving (for example) the down-arrow key navigational input from the user, the process module 106 evaluates the input and executes a response to advance the current state of the FSM 300 from the stop state 302a to a single discrete navigation state 302b.

The single discrete navigation state 302b may represent a state of navigation in which the content presented on a display 105 moves a discrete distance such that new content may be presented. In another implementation, the single discrete navigation state 302b may represent a state of navigation in which a marker, such as an arrow, cursor, box etc., used to point at a particular item in the presented content moves a discrete distance such that on completion of the movement, the marker points to another item in the presented content. In one embodiment, the scale may be left unchanged and some content may exit the screen area and some content previously invisible enters the screen area. For example, a cell phone may scroll down a single discrete distance on a contact list (one entry below a current highlighted entry in the contact list). Following this discrete movement, the display returns to a non-moving state similar to the stop state 302a (the FSM 300 remains in the single discrete navigation state 302b). The process module 106 in the computing device 100 may generate one or more virtual pages to represent the single discrete navigation state 302b.

Following the discrete movement, once the display in the single discrete navigation state 302b returns to a non-moving state similar to the stop state 302a, the difference between a single discrete navigation state 302b and the stop state 302a is their response to a subsequent navigational input. More particularly, the transition rules 304 linked to the stop state 302a may be different from the transition rules 304 linked to the single discrete navigation state 302b. Therefore, navigational inputs in each of these states 302a and 302b may result in a response of a different transition rule and consequently may result in a transition to a different state 302. For example, once in the single discrete navigation state 302b, successive short presses of the down arrow key (pressing and releasing the key within a first time period T1) may cause a display marker to move down through items in a list one at a time, while the FSM 300 remains in the single discrete navigation state. Conversely, successive short presses of an up arrow key may cause the display marker to move up through items in a list one at a time, while the FSM 300 again remains in the single discrete navigation state. Pressing and holding either key for a second time period greater than T1 may cause a transition to a different state. Continuing to hold a key may cause a sequence of transitions through a series of states as successive time periods elapse.

Transition rule 304b links the single discrete navigation state back to the stop state 302a. In one embodiment, the transition condition of transition rule 304b is met if a timer has elapsed. In such an embodiment, the input module 102 sends a navigational input to the process module 106 when a fixed period of time has elapsed since a previous navigational input was sent or received. Alternatively, the process module may maintain its own timer and generate its own navigational input upon expiration of the timer. The process module 106 evaluates the navigational input and executes a response to return the current state of the FSM 300 to the stop state 302a. Continuing with the previous example with the FSM 300 currently in the single discrete navigation state 302b, if the user hasn't entered a directional input within a fixed period of time, a timer elapses and the FSM 300 returns to the stop state 302a. In another embodiment, transition condition of transition rule 304b is met if the user enters a directional input having a direction opposite to the direction of the directional input resulting in the FSM 300 entering the single discrete navigation state 302b.

Transition rule 304c links the single discrete navigation state 302b to a repeated discrete navigation state 302c. In one embodiment, the transition condition of transition rule 304c is met if the user (currently in the single discrete navigation state 302b) enters a directional input of a certain duration having the same direction as the directional input entered to put the FSM 300 into the single discrete navigation state 302b from the stop state 302a. In such an embodiment, on receiving such a navigational input from the user, the process module 106 evaluates the input and executes a response to advance the current state 302 of the FSM 300 from the single discrete navigation state 302b to the repeated discrete navigation state 302c.

The repeated discrete navigation state 302c may represent a state of navigation in which the display changes by repeatedly moving discrete distances through the presented contents. The repeated discrete navigation state 302c is a navigation mode in which the presented contents are navigated automatically. The process module 106 in a computing device 100 generates a plurality of virtual pages to represent repeated discrete movement of content. Alternatively, a display marker that points to displayed content items moves through the contents in a repeated and discrete manner.

Transition rule 304d links the repeated discrete navigation state 302c back to the single discrete navigation state 302b. In one embodiment, the transition condition of transition rule 304d is met if a timer has elapsed as described above in relation to transition rule 304b. In another embodiment, a transition condition of transition rule 304d is met if the user enters a directional input having a direction opposite to the direction of the directional input which resulted in the FSM 300 entering the repeated discrete navigation state 302c from the single discrete navigation state 302b. For example, if a "long" down arrow press causes a transition from single discrete navigation to repeated discrete navigation, a "short" up arrow press might return the FSM to single discrete navigation, stopping the navigation at particular list item.

Transition rule 304e links the repeated discrete navigation state 302c to a continuous navigation state 302d. In one embodiment, the transition condition of transition rule 304e is met if the user (currently in the repeated discrete navigation state 302c) enters a directional input having the same direction as the directional input entered to put the FSM 300 into the single discrete navigation state 302b from the stop state 302a and the directional input entered to put the FSM 300 into repeated discrete navigation state 302c from the single discrete navigation state 302b. In such an embodiment, on receiving such navigational input from the user, the process module 106 evaluates the input and executes a response to advance the current state of the FSM 300 from the repeated discrete navigation state 302c to the continuous navigation state 302d.

The continuous navigation state 302d represents a state of navigation which includes a continuous shifting of the arrangement of the presented contents in a smooth and repeated fashion. In one example, the continuous shifting of content may be the continuous scrolling of content in a contact list. In another example, the continuous shifting of content may be the continuous panning of a map. A process module 106 in a computing device 100 generates a plurality of virtual pages to represent the continuous navigation state 302d such that each virtual page includes snapshot of the arrangement of the presented contents after navigation of a desired distance through the contents. In the continuous navigation state 302d, the presented content may be animated in continuous motion with a fairly constant velocity. In another embodiment, the velocity of motion increases or decreases, thereby accelerating or decelerating the navigation of content, depending on other factors such as the receipt and acceptance of a navigational input, the duration of the navigational input, the number of navigational inputs, or the lapse of a timer. In still another embodiment, the velocity of motion changes in relation to other factors such as the quantity of content and duration of navigation. Such an embodiment may be particularly useful to reduce time taken to navigate through a large amount of content. In one embodiment, in the continuous navigation state 302d the scale of the content on the display 105 continuously decreases such that more contents can be presented on the display at the same time, thereby expediting navigation. In certain embodiments, the scale of the content may be changed in the continuous navigation state 302d depending on the quantity of contents and duration of navigation and velocity of navigation. Additionally and optionally, the layout of the scaled presented contents may be rearranged in the continuous navigation state 302d such that contents conform to the new boundaries of the display screen.

Transition rule 304f links the continuous navigation state 302d back to the repeated discrete navigation state 302c. In one embodiment, the transition condition of transition rule 304f is met if a timer has elapsed as described above in relation to transition rule 304b. In one embodiment, the transition condition of transition rule 304f is met if the user enters a directional input having a direction opposite to the direction of the directional input which resulted in the FSM 300 entering the continuous navigation state 302d from the repeated discrete navigation state 302c. Such a transition allows a user to slow navigation without stopping.

Transition rule 304g links the continuous navigation state 302d to the stop state 302a. In one embodiment, the transition condition of transition rule 304g is met if the user (currently in the continuous navigation state 302d) enters a directional navigational input. In such an embodiment, on receiving the navigational input from the user, e.g. a fourth consecutive input of a directional input, the process module 106 evaluates the input and executes a response to advance the current state of the FSM 300 from the continuous navigation state 302d to the stop state 302a.

Transition rule 304h links the stop state 302a to the continuous navigation state 302d. In one embodiment, the transition condition of transition rule 304h is met if the user (currently in the stop state 302a) enters a particular directional navigational input. In such an embodiment, on receiving the navigational input from the user, e.g. a directional input having a direction opposite to the direction of the directional input which would result in the FSM 300 entering the single discrete navigation state 302b from the stop state 302a, the process module 106 evaluates the input and executes a response to advance the current state of the FSM 300 from the stop state 302a to the continuous navigation state 302d.

The FSM 300 may also include transition rules that link the single discrete navigation state 302b with the continuous navigation state 302d (transition rule 304i). FSM 300 may also include transitions rules that also link the continuous navigation state 302d back to the single discrete navigation state 302a (transition rule 304j). In alternative embodiments, the FSM 300 may include transition rules that link the stop state 302a to the repeated discrete navigation state 302c (transition rule 304k). The FSM 300 may also include transition rules that link the repeated discrete navigation state 302c back to the stop state 302a (transition rule 3041).

It will be seen that all of the state transitions illustrated in Figure 3, as well as navigational commands that control navigation within individual FSM states, can be implemented in a variety of different ways; e.g. using a single pair of opposite directional arrow keys in combination with timer periods monitoring the duration of key presses and/or intervals between key presses.

The invention can also be usefully implemented with fewer navigational modes than illustrated in Figure 3. In particular, the repeated discrete navigation mode could be omitted.

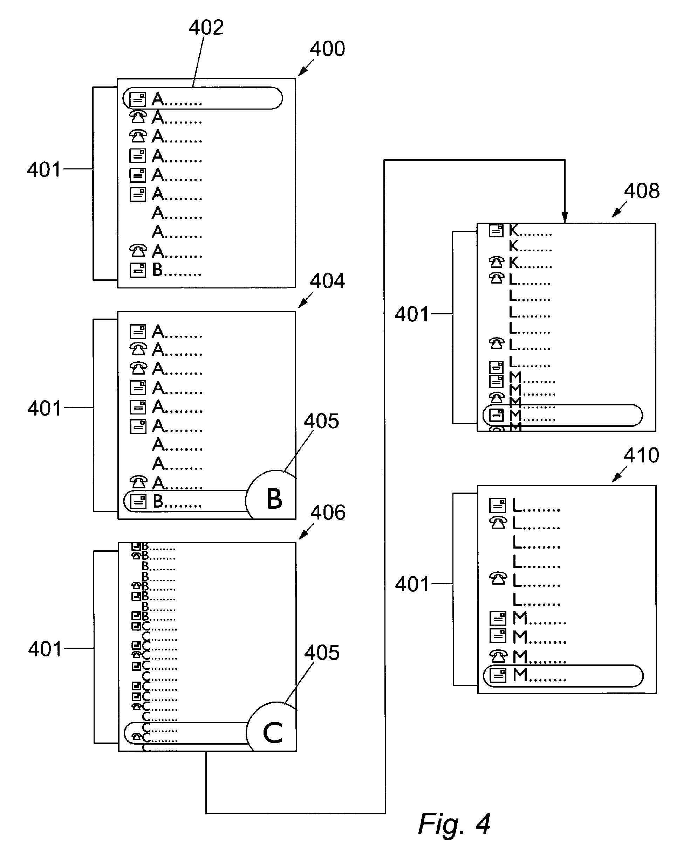

Figure 4 includes a set of illustrative screen shots 400, 404, 406, and 408 of a device 100 implementing a content navigation method represented by the finite state machine 300 for navigating a list. Each screen shot 400, 404, 406, and 408 is generated by the renderer 110 based on a virtual page generated by the process module 106. The depicted set of screen shots 400, 404, 406, and 408 are from a contact list in a mobile electronic device such as a cell phone or a PDA. Screen shot 400 includes the beginning of a list of contacts 401 in alphabetical order. The top entry in the screen shot 400 is shown to be highlighted with a rounded edge box-type marker 402. The marker 402 shown in screen shot 400 highlights one entry ("Adamson, Jacq"). As the device 100 begins to navigate through the contact list 401, the marker 402 may be moved to a new location to highlight other entries. The marker 402 may also highlight multiple entries simultaneously.

Screen shot 400 is a sample screen shot that may be output by the renderer 110 of computing device 100 while the FSM 300 is in the stop state 302a. The contact list 401 is static and the marker 402 is non-moving and all the contacts are shown in an initial scale and arrangement. On receiving a down-arrow key navigational input from a user, the process module 106 evaluates the input and executes a response to advance from the stop state 302a to a repeated discrete navigation state 302c (e.g. by a direct transition 304k or successive transitions 304a and 304c, possibly dependent on the duration of the key press).

Screen shot 404 is a sample screen shot that may be output by the renderer 110 of computing device 100 while the FSM 300 is in a repeated discrete navigation state 302c where the marker 402 repeatedly moves discrete distances through the contact list 401. Screen shot 404 depicts the contact list 401 after the device has begun to scroll through the contact list 401. Screen shot 404 includes an indicator 405 that indicates the portion of the contact list 401 that is currently being displayed. i.e., contacts beginning with the letter "b". As the contact list 401 is being scrolled, the display is updated with contents that are currently beyond the limits of the screen size.

Screen shot 406 is a sample screen shot that may be output by the renderer 110 of computing device 100 while the FSM 300 is in a continuous navigation state 302d where the marker 402 continuously moves down the contact list 401 in a smooth manner. The marker 402 in continuous navigation state 302d shown in screen shot 406 may move with a velocity much higher than the velocity of the marker 402 in the repeated discrete navigation state 302c shown in screen shot 404 to give the appearance of continuous and smooth navigation. The marker 402 in screen shot 406 can also be made to highlight more than one entry to help improve the smoothness and speed of navigation. In one embodiment, the marker 402 starts in a position on the top portion of the currently displayed contact list on the top portion of the screen, moves through the items on the contact list currently displayed, and reaches the item currently located at or near the bottom portion of the screen. In such an embodiment, the marker having reached the bottom portion of the screen, may remain static and instead the contact list begins to shift upwards in a smooth manner. As items on the contact list shift upwards, the marker 402 being at the bottom portion of the screen may highlight items on the contact list that were previously hidden below the area of the screen and are now visible. In other embodiments, the marker 402 may begin and end at other portions of the screen without departing from the scope of the invention. Screenshot 406 depicts a zoomed-out version of the contact list 401 as the scrolling is accelerated. The zooming-out permits more entries to be visible on the display 105. The indicator 405 now indicates that the device is displaying contacts in contact list 401 beginning with the letter "c." On receiving an up-arrow key navigational input from a user, the process module 106 evaluates the input and executes a response to advance back to the stop state 302a and to zoom-in in order to return the scale of the contact list 401 back to the initial scale, as in screen shot 410. In screen shot 408, the contact list 401 is in the process of returning to its original scale on the display 105. The marker 402 in screen shots 408 and 410 now highlights a different entry in the contact list 401 that was reached after scrolling through a portion of the contact list 401 using the systems and methods of invention.

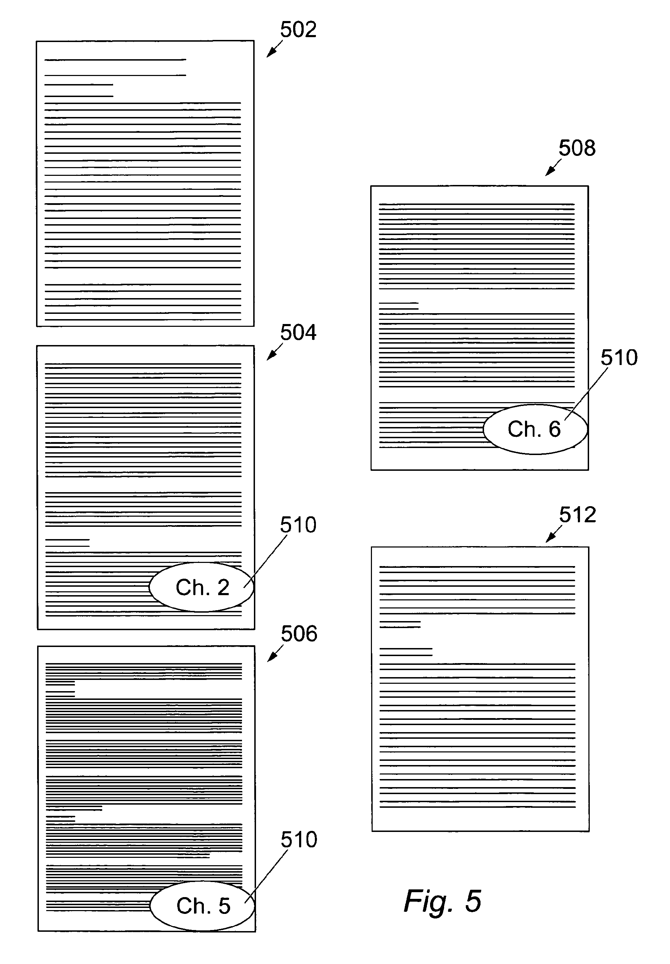

Figure 5 includes a set of screen shots 502, 504, 506, 508, and 512 of a device implementing the content navigation method represented by the finite state machine 300 for navigating a text document. As described in relation to Figure 4, each screen shot is generated by the renderer 110 based on a virtual page generated by the process module 106. The depicted set of screen shots are from a text document from an electronic device such as an e-book.

More particularly, screen shot 502 includes the beginning of the text of chapter in a book. The text is shown to cover most of the screen area and to include about fifteen lines of text in addition to the book heading and the chapter heading. Each line of text includes approximately six words. Screen shot 502 is a sample screen shot that may be output by the renderer 110 of computing device 100 while the FSM 300 is in the stop state 302a. The text on the screen is static and the marker is non-moving and all the words are shown in an initial scale and arrangement. On receiving a down-arrow key navigational input from a user, the process module 106 evaluates the input and executes a response to advance from the stop state 302a to a continuous navigation state 302d (e.g. by a direct transition 304h or successive transitions 304a, 304c and 304e, possibly dependent on the duration of the key press).

Screen shots 504, 506 and 508 show subsequent screen shots of other portions of the text document at a different scale as a user scrolls through the text document. Screen shots 504, 506 and 508 include an indicator 510 that indicates the chapter of the text that is currently being displayed in the screen shot. In screen shot 504, the indicator 501 includes "Ch. 2". Screen shot 504 depicts a zoomed-out version of the text as the device begins scrolling. As the device zooms-out, the size of the text decreases and the number of lines of text visible in screen shot 504 increases to about twenty-three lines in addition to a chapter heading. The arrangement of the text is also modified to adjust for the decrease in text size and therefore, the number of words per line increases to about eight words. Screen shot 506 depicts a further zoomed-out version of the text as the scrolling is accelerated. In the illustrated embodiment of the continuous navigation state 302d, the device scrolls and zooms continuously to enable rapid navigation. In screen shot 506, more text is visible in the screen area such that the number of lines is increased to about thirty-four lines and the number of words per line is increased to about fifteen words. On receiving an up-arrow key navigational input from a user, the process module 106 evaluates the input and executes a response to advance back to the stop state 302a and to zoom-in in order to return the scale of the text back to the initial scale. Screen shot 508 depicts the text returning to the stop state with the displayed text zoomed-in to a scale larger than that of screen shot 506. The indicator 510 now indicates that the device is displaying text from chapter 6. In screen shot 512, the text is back to its original scale on the display. The screen shows a different chapter (Chapter 6) that was read after scrolling through a portion of the text of a book using the systems and methods of the invention.

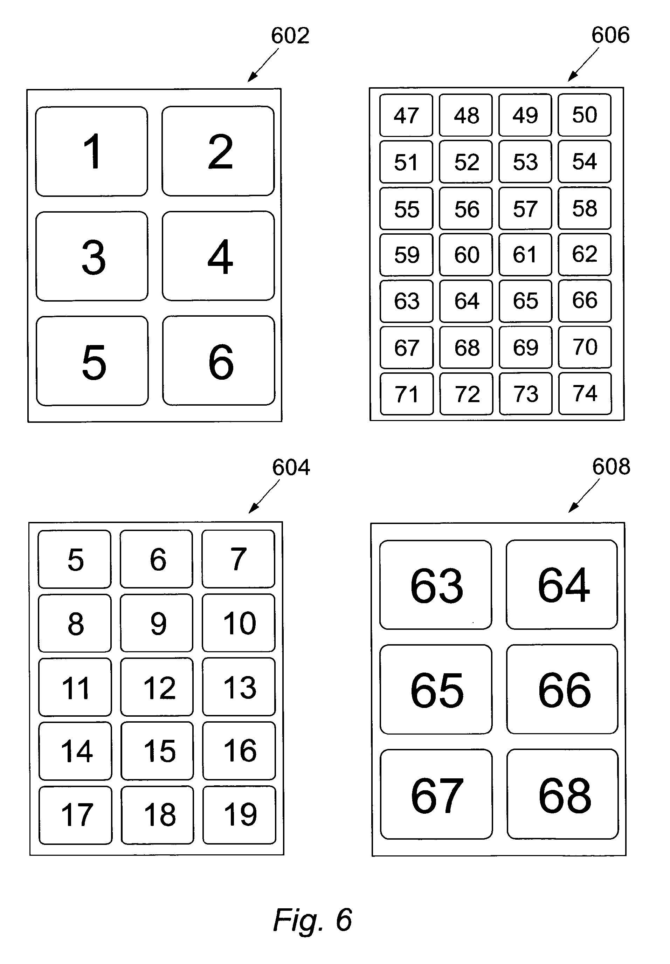

Figure 6 includes a set of conceptual screen shots 602, 604, 606, and 608 of a device implementing the content navigation method represented by the finite state machine 300 for navigating a series of objects arranged in a grid. Such objects could be, for example, thumbnail images of photographs stored on a digital camera or icons corresponding to files in a directory. Each object may be the same size, or the objects may vary in size. Each screen shot is generated by the renderer 110 based on a virtual page generated by the process module 106. Screen shot 602 displays a first set of objects numbered 1-6 displayed at a first scale. The objects are arranged in a grid having three rows and two columns. Screen shot 602 is a sample screen shot that may be output by the renderer 110 of computing device 100 while the FSM 300 is in a stop state 302a. On receiving a down-arrow navigational input, the device zooms-out and scrolls through the objects being displayed. Screen shots 604 and 606 are sample screen shots that may be output by the renderer 110 of computing device 100 while the FSM 300 is in the continuous navigation state 302d where the objects being displayed are continuously scrolled in a smooth manner. Screen shots 604 and 606 may also be sample screen shots that may be output by the renderer 110 of computing device 100 while the FSM 300 is in the repeated discrete navigation state 302c where the objects being displayed are scrolled in discrete steps. In screen shot 604, the device has begun to zoom out of the list of objects. The device, now displaying the objects numbered 5-19 at a smaller scale, can fit three objects numbered 5-19 per row, as opposed to only two. In screen shot 606, the device is fully zoomed out, displaying objects numbered 47-74, four objects per row. On receiving an up-arrow key navigational input from a user, the process module 106 evaluates the input and executes a response to advance back to the stop state 302a and to zoom-in in order to return the scale of the objects back to the initial scale. In screenshot 608, the device is zoomed back into objects numbered 63-68.

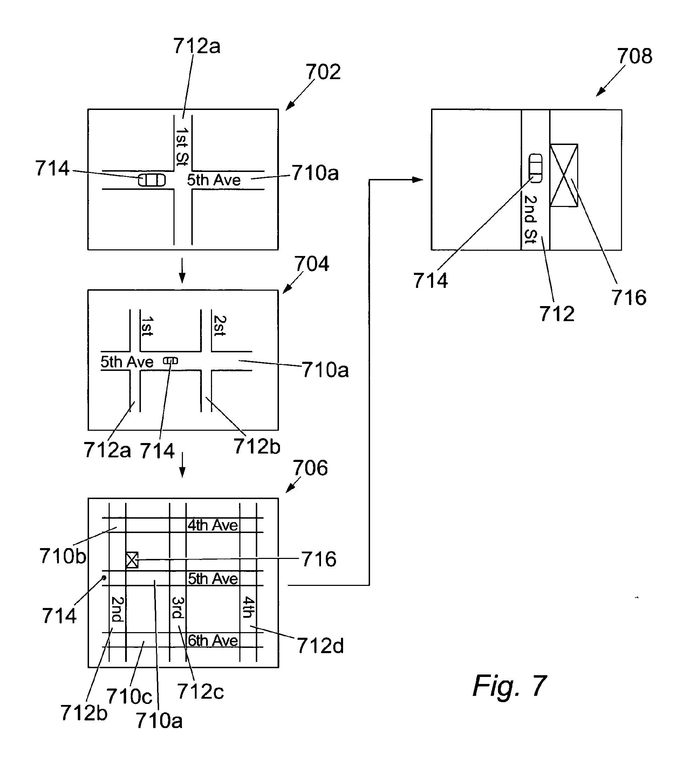

Figure 7 includes a set of illustrative screen shots 702, 704, 706, and 708 from a device implementing a content navigation method represented by a finite state machine 300 for navigating a map. Each screen shot is generated by the renderer 110 based on a virtual page generated by the process module 106. The depicted screen shots are from a map in a mobile electronic device such as a GPS (Global Positioning System) instrument. Screen shot 702 includes a map showing roads 710 and 712 with a vehicle 714. Roads 710 and 712 are shown perpendicular to each other and may be representative of city streets and avenues. The vehicle 714 is shown to be moving on road 710a (5^{th} Avenue) towards road 712a (1^{st} Street). The systems and methods of navigation according to the invention may be used in conjunction with a GPS system such that the user may navigate through a GPS enabled map as he/she is driving. The objects on the screen of the device may be updated by both user entered navigational inputs as well as GPS navigational inputs entered from an earth-orbiting communication satellite. Screen shot 702 is a sample screen shot that may be output by the renderer 110 of computing device 100 while the FSM 300 is in a repeated discrete navigation state 302c or continuous navigation state 302d where the position of the vehicle 714 is regularly updated based on the position information obtained from the satellite. Depending on the available communication system characteristics such as bandwidth, the position of the vehicle may be updated in discrete steps (represented by repeated discrete navigation state 302c) or continuously in a smooth manner (represented by continuous navigation state 302d). The objects on the display such as the roads 710 and 712, and the vehicle 714 are shown in a first scale. Furthermore, the scale of the roads 710, 712 and the vehicle 714 are not shown to change in screen shot 702.

On receiving a navigational input from a user, the process module 106 evaluates the input and executes a response to advance from the current state of repeated discrete navigation 302c or continuous navigation 302d to a state of continuous navigation 302d with the added feature of zooming-out. Screen shots 704 and 706 depict zoomed-out views of the map where more roads 710, 712 are visible and the vehicle 714 is shown to be at a smaller scale corresponding to the degree of zooming-out. More specifically, in screen shot 704, the map continues to pan along with the movement of the vehicle 714. However, since the map has zoomed-out, the vehicle 714 appears smaller and an additional road 712b (2^{nd} Street) is visible. The vehicle 714 in screen shot 704 has moved past road 712a and is approaching road 712b.

In screen shot 706, the device has zoomed-out further to reveal more roads 710, 712, exclude some roads 712a, and the vehicle 714 is zoomed-out further and appears as a dot on the display. The vehicle 714 is still on road 710a and has reached the intersection between 710a and 712b (5^{th} Avenue and 2^{nd} Street). Also, shown in screen shot 706 is marker to indicate the destination 716. The destination is located alongside road 712b between roads 710a and 710b. On receiving a second navigation input from the satellite to indicate that the vehicle has arrived at the destination 716, the device advances from the continuous navigation state with zoom 302d to a stop state 302a. Screen shot 708 is a sample screen shot that may be output by the renderer 110 of computing device 100 while the FSM 300 is in the stop state 302a depicting the vehicle 714 at the destination 716 on road 712b. The scale of the vehicle, road and destination marker are returned to an initial value.

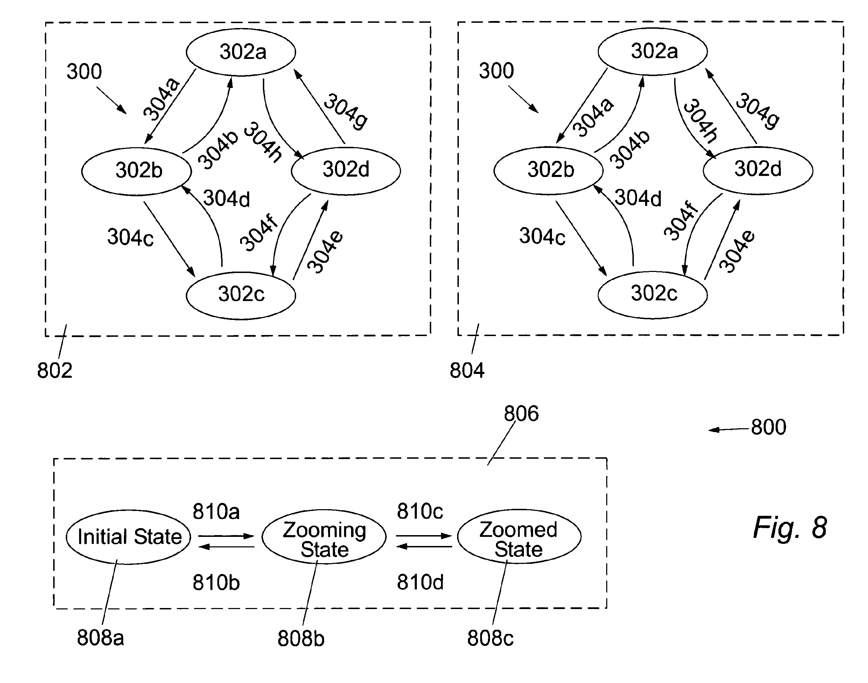

Figure 8 is a system 800 depicting three finite state machines 802, 804, and 806 for providing control of content navigation in two dimensions, according to an illustrative embodiment of the invention. More specifically, the system 800 includes an FSM 802 for navigating through contents along the horizontal dimension (x-axis) and an FSM 804 for navigating through contents along the vertical dimension (y-axis). The FSMs 802 and 804 are operated in similar manner to FSM 300 of Figure 3. As noted earlier, FSMs 802 and 804 have states 302 and transition rules 304 (for simplicity, not all of the transitions of Figure 3 are reproduced here). The system 800 may be included in the process module 106 of a computing device 100. The states 302 are representative of the navigation modes and the transition rules 304 are representative of the test conditions and responses for handling navigational inputs obtained from the input module 102 of the computing device 100 or from within the process module 106. The system 800 also includes an FSM 806 for providing control of content scale adjustment through the operations of zooming-in and zooming-out. FSM 806 has states 808a - 808c ("states 808") and transition rules 810a - 810c ("transition rules 810"). More specifically, the FSM 806 includes an initial state 808a, a zooming state 808b and a zoomed state 808c. The states 808 in the FSM 806 are also representative of navigation modes and are realized in conjunction with states 302 of FSMs 802 and 804. For example, consider a matrix of displayed contents being navigated through diagonally in a continuous manner along both the x-axis and the y-axis such that both FSM 802 and 804 were in a continuous navigation state 302d. The diagonally navigating contents may be displayed in a first scale (initial state 808a). The contents may be also displayed in a state where the scale of the displayed contents is also continuously changing (zooming state 808b) or the contents may be displayed in a second scale different from the first scale (zoomed state 808c).

The initial state 808a represents a state of navigation in which the contents presented on display 105 are presented at an initial scale and arranged in an initial layout on the screen. The displayed contents may be static or non-static. Transition rule 810a links the initial state 808a to the zooming state 808b. In one embodiment, the transition condition of transition rule 810a is met if either one of the FSMs 802 and 804 enters the continuous navigation state 302d. In such an embodiment, when either FSM 802 or FSM 804 enter the continuous navigation state 302d, a navigational input is sent from within the process module 106 such that the process module 106 evaluates the input and executes a response to advance the current state of FSM 806 from the initial state 808a to a zooming state 808b.

The zooming state 808b represents a state of navigation in which the scale of the contents presented on display 105 is made to continuously change. In one embodiment, the scale of the contents may be decreased continuously such that the display appears to continuously zoom-out. In the zooming state 808b, as the contents' scale is being changed, the contents may be rearranged to conform to the new boundaries of the scaled display screen. Transition rule 810b links the zooming state 808b back to the initial state 808a. In one embodiment, the transition condition of transition rule 810b is met if the FSM 802 and FSM 804 leave the continuous navigation state 302d through transition rules 304g and the navigation is stopped.

Transition rule 810c links the zooming state 808b to the zoomed state 808c. In one embodiment, the transition condition of transition rule 810c is met if a maximum zoom level has been reached. The zoomed state 808c represents a state of navigation in which the scale of the contents presented on display 105 are presented at a constant scale different from the initial scale and may be arranged in a layout different from an initial layout. Transition rule 810d links the zoomed state 808c back to the zooming state 808b. In one embodiment, the transition condition of transition rule 810d is met if either FSM 802 or FSM 804 enters the continuous navigation state 302d.

The separation of the zoom adjustment functionality and the navigation functionality in system 800 increases the number of degrees of freedom of operability for the user of a computing device. In other embodiments (not illustrated), the FSM 806 may include transition rules that link the initial state 808a with the zoomed state 808c and vice-versa. In alternative embodiments, FSM 806 may accept user entered navigational inputs as transition conditions for transition rules 810.

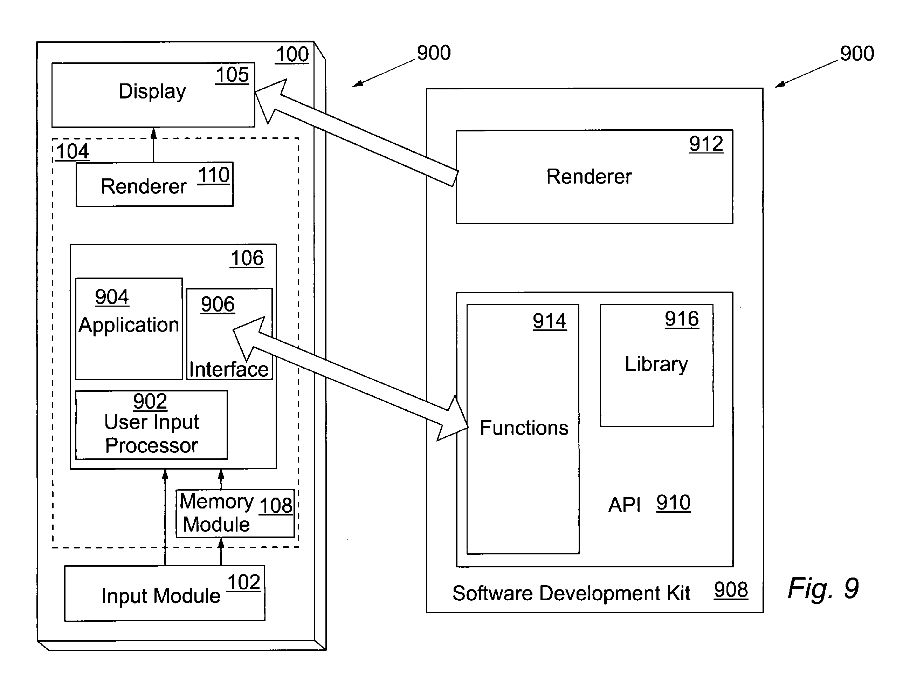

In certain embodiments, such as those shown in Figure 9, a software development kit may be combined with the computing device 100 to navigate contents. Figure 9 depicts an architecture 900 for interfacing such a software development kit with the computing device 100 according one illustrative embodiment. In particular, Figure 9 shows a computing device 100 having an input module 102, a navigation module 104 and a display 105. The navigation module 104 includes a processing module 106, a memory module 108 and a renderer 110. The processing module 106 further comprises a user input processor 902, an application 904 and an interface 906. The user input processor 902 processes navigational inputs received from the input module 102 as shown in process 200 of Figure 2. Application 904 includes software programs having the contents to be displayed. For example, the application may include, without limitation, a word processor, a document viewer, a web browser, a personal digital assistant calendar or contact list, or a map program. The interface 906 serves as a link between the computing device 100 and a software development kit (SDK) 908. SDK 908 includes an application program interface (API) 910 and a renderer 912. The API 910 comprises a set of functions 914 and a library 916. The SDK 908 is typically used to support a variety of applications 904 in providing navigation functionality on a computing device 100. The set of functions 914 provides an interface between the SDK 908 and the computing device 100.

More specifically, the set of functions 914 includes software functions for at least one of memory allocation, file access, screen update, timer callbacks and debugging data. In certain embodiments, the set of functions 914 includes software functions for starting and stopping the operation of the SDK 908, issuing commands for content manipulation, and notifying SDK 908 of computing device 100 system status such as changes in available screen size or screen status. In one embodiment, the set of functions 904 may be called by the interface 906 depending on a particular application. The set of functions 904 called by the interface 906 may request display contents such that the renderer 912 may prepare the display contents for display. In one embodiment, the set of functions 904 called by the interface 906 may be translated into an instruction to execute software stored in the library 916.

In certain embodiments, library 916 includes software to support a variety of navigation modes and navigation characteristics. In other embodiment, library 916 includes a generalized protocol to navigate through contents having different formats and originating from different applications 904 and different computing devices 100. In certain embodiments, the library 916 includes software to implement features including zooming and navigating through long lists, navigating through multiple sets of contents and navigating through multiple screen sizes. The library 916 may also include software to implement other navigation features without departing from the scope of the invention.

The renderer 912 in the SDK 908 presents the contents from application 904 on the display 105. The renderer 912 may be used in addition to, or in lieu of the renderer 110 in the computing device. The renderer 912 may include an ePAGE™ rendering engine, as provided by Picsel Technologies of Glasgow, Scotland. The renderer 912 may include other rendering engines without departing from the scope of the invention. The renderer 912 may be configured to include features such as anti-aliasing and high-speed zooming and navigating display contents. The rendered image may then be sent to the display module 105 for display.

The invention may be embodied in other specific forms without departing from the spirit or essential characteristics thereof. The foregoing embodiments are therefore to be considered in all respects illustrative, rather than limiting of the invention.

## Claims

1. A method of navigating content on a computing device comprising:
displaying content on the computing device at a first scale;
in response to receiving a first navigation input via the computing device, navigating a first discrete distance through the displayed content;
in response to receiving a subsequent navigation input via the computing device i) initiating a continuous navigation through the content, and ii) reducing the scale of the content such that more of the content is displayed on the computing device at a time.

2. A method of claim 1, comprising, in response to receiving an intermediate navigation input via the computing device after the first navigation input and before the subsequent navigation input, initiating a repeated discrete navigation through the content.

3. A method of claim 1, comprising, in response to receiving an additional navigation input via the computing device during continuous navigation, stopping the navigation.

4. A method of claim 1, comprising in response to receiving an additional navigation input via the computing device during continuous navigation, initiating a repeated discrete navigation.

5. A method of claim 2, comprising in response to receiving an additional navigation input via the computing device during the repeated discrete navigation, stopping the navigation.

6. The method of claim 1, wherein reducing the scale of the content includes progressively reducing the scale of the content from the first scale to a second scale.

7. The method of claim 1, comprising, during the continuous navigation through the content, displaying an indicator identifying a currently displayed location of the content.

8. The method of claim3, wherein stopping the navigation comprises increasing the scale of the content back to the first scale.

9. The method of claim 3, wherein stopping the navigation comprises progressively increasing the scale.

10. The method of claim 3, wherein the stopping the navigation comprises progressively slowing the continuous navigation until the navigation stops.

11. The method of claim 1, comprising rearranging the contents of a display based on the scale at which the content is displayed.

12. The method of claim 1, wherein the content is a menu of a user interface.

13. The method of claim 1, wherein the content comprises a list and the discrete navigation comprises navigating from one selected item in the list to a neighboring item on the list.

14. The method of claim 13, wherein the list is configurable to include at least one of a text item and an image item as a structured list entry.

15. A method of navigating content on a computing device comprising:
displaying content on the computing device at a first scale;
in response to receiving a navigation input via the computing device, initiating a continuous navigation through the content, wherein the computing device progressively reduces the scale of the content from the first scale to a second scale during the continuous navigation; and
rearranging the contents of a display based on the scale at which the content is displayed.

16. A method of claim 15, comprising in response to receiving an additional navigation input via the computing device during continuous navigation, stopping the navigation.

17. A method of claim 15, comprising in response to receiving an additional navigation input via the computing device during continuous navigation, initiating a repeated discrete navigation.

18. A method of claim 15, comprising in response to receiving an additional navigation input via the computing device during continuous navigation, stopping a reduction in the scale of the content.

19. A method of claim 15, comprising in response to receiving an additional navigation input via the computing device during continuous navigation, stopping a rearrangement of the contents of the display.

20. The method of claim 15, wherein the content is a menu of a user interface.

21. A user interface for a computing device comprising:
an input device for accepting a plurality of navigational inputs; and
a navigation control module including a finite state machine having states including:
a stop state, a single discrete navigation state, and a continuous navigation state, and
transition conditions including:
acceptance of the navigational inputs from the input device, such that movement from one state to another in the finite state machine is initiated upon acceptance of one of the navigational inputs from the input device;
wherein in the continuous navigation state, the user interface decreases the scale of content displayed on the computing device such that additional content can be displayed at a time.

22. The user interface of claim 21, wherein the finite state machine includes a repeated discrete navigation state.

23. The user interface of claim 21, wherein in the continuous navigation state, the user interface rearranges the content on the display.

24. The user interface of claim 21, wherein the input device includes at least one of a keyboard, keypad, mouse, joystick, scroll-wheel and touch-sensitive surface.

25. The user interface of claim 21, wherein the navigational input includes directional navigational inputs.

26. The user interface of claim 21, comprising a second navigation control module such that the at least two navigation control modules are used to navigate along two dimensions, wherein each navigation control module corresponds to navigation along a different dimension.

27. The user interface of claim 21, additionally including a memory module comprising a database having state and transition condition information.

28. The user interface of claim 21, wherein the navigation control module changes the state of the finite state machine from the stopped state to the single discrete navigation state in response to receiving the directional navigation input, wherein the directional navigation input has a first direction.

29. The user interface of claim 28, wherein the finite state machine includes a repeated discrete navigation state and wherein the navigation control module changes the state of the finite state machine from the single discrete navigation state to the repeated discrete navigation state in response to receiving a second directional navigation input having the first direction.

30. The user interface of claim 29, wherein the navigation control module changes the state of the finite state machine from the repeated discrete navigation state to the continuous navigation state in response to receiving a third directional navigation input having the first direction.

31. The user interface of claim 30, wherein the navigation control module changes the state of the finite state machine from the continuous navigation state to the stopped state in response to receiving a fourth directional navigation input.

32. The user interface of claim 29, wherein the navigation control module changes the state of the finite state machine from repeated discrete navigation state to a stopped state in response to receiving a directional navigation input, wherein the directional navigation input has a direction opposite to the first direction.

33. The user interface of claim 30, wherein the navigation control module changes the state of the finite state machine from the continuous navigation state to a stopped state in response to receiving a directional navigation input, wherein the directional navigation input has a direction opposite to the first direction.

34. The user interface of claim 30, wherein the navigation control module changes the state of the finite state machine from the continuous navigation state to a repeated discrete navigation state in response to receiving a directional navigation input, wherein the directional navigation input has a direction opposite to the first direction.

35. The user interface of claim 28, wherein the navigation control module changes the state of the finite state machine from a single discrete navigation state to a stopped state in response to receiving a directional navigation input, wherein the directional navigation input has a direction opposite to the first direction.

36. The user interface of claim 28, wherein the navigation control module changes the state of the finite state machine from a single discrete navigation state to a stopped state after a certain period of time has elapsed with no navigational input.

37. The user interface of claim 29, wherein the navigation control module changes the state of the finite state machine from a repeated discrete navigation state to a stopped state after a certain period of time has elapsed with no navigational input.

38. The user interface of claim 29, wherein the navigation control module changes the state of the finite state machine from the continuous navigation state to a stopped state after a certain period of time has elapsed with no navigational input.

39. The user interface of claim 21, wherein the acceptance of a navigational input includes detecting a navigational input comprising at least one of a key press, touch screen or touch pad input, mouse or trackball input including a button single-click or double-click, a scroll wheel input, a time duration of activation of a navigational input and a time interval following a navigational input or between successive navigational inputs.

40. A computing device adapted to implement the method as claimed in any one of claims 1 to 20.

41. A computing device incorporating a user interface as claimed in any one of claims 21 to 39.

42. A computer program encoded on a data carrier for implementing the method as claimed in any one of claims 1 to 20.

43. A computer program encoded on a data carrier for implementing a user interface as claimed in any one of claims 21 to 39.
